# EUROPEAN PATENT APPLICATION

(11) **EP 3 741 489 A1**
(43) Date of publication of application: **25.11.2020**
(21) Application number: 19020341.4
(22) Date of filing: 24.05.2019
(51) Int. Cl.: B23K 9/04, B23K 9/16, B23K 9/173, B23K 9/235, B23K 9/29, B23K 9/32, B33Y 10/00, B33Y 30/00, B33Y 40/00

(54) **DEVICE FOR CLEANING AND COOLING A WORKPIECE UPON WIRE-ARC ADDITIVE MANUFACTURING (WAAM)**

(71) Applicant: Linde GmbH, 82049 Pullach (DE)
(72) Inventor: Scholz, Jürgen, 81379 München (DE); Thiollier, Frédéric, 31520 Ramonville (FR)
(74) Representative: Lu, Jing

(57) **Abstract**

The present invention relates to a device (1) for wire-arc additive manufacturing, comprising: a welding torch (3) configured to generate an arc (30) for generating a weld pool (31) on a surface (2a) of a workpiece (2), and a wire feeder (4) configured to feed a wire (5) towards the weld pool (31) to generate a weld seam (20) on said surface (2a). According to the present invention, the device (1) comprises a nozzle (6) configured to discharge CO₂ snow onto a surface (2a) of a workpiece (2) for cleaning the surface (2a) before generating said weld seam (20) on said surface (2a), wherein the nozzle (6) is rigidly connected to the welding torch (3).

## Description

The present invention relates to a device for wire-arc additive manufacturing (WAAM) and to a corresponding method for WAAM.

WAAM processes can be conducted by applying a metallic material layer by layer using e.g. established inert gas metal arc welding processes, resulting in a desired 3D structure.

When laying weld seam after weld seam on top of each other usually two difficulties arise in WAAM. First of all, with increasing numbers of weld seams on top of each other a lot of heat is generated in the already produced section. This can cause instabilities in the weld process or the desired contour cannot be created without waiting until the structure is cooled down. Furthermore, smoke, dust and spatters of the weld process can be deposited on the weld seams. These residues may influence mechanical properties of the workpiece when they are melted into the next weld seam layer and may also influence the weld process e.g. the weld stability.

Thus, the problem to be solved by the present invention is to provide a device and a method for WAAM that reduce the above-stated difficulties.

This problem is solved by a device having the features of claim 1 and by a method having the features of claim 11.

Preferred embodiments of these aspects of the present invention are disclosed in the corresponding sub claims and are described below.

According to claim 1, a device for wire-arc additive manufacturing is disclosed, wherein the device comprises: a welding torch configured to generate an arc for generating a weld pool on a surface of a workpiece, and a wire feeder configured to feed a metallic wire towards the weld pool to generate a weld seam on said surface.

According to the present invention, the device comprises a nozzle configured to discharge CO₂ snow onto a surface of the workpiece for cleaning the surface (e.g. before generating said weld seam on said surface), wherein the nozzle is rigidly connected to the welding torch.

Furthermore, according to an embodiment of the present invention, the nozzle is further configured to discharge a cooling gas onto said workpiece to cool the workpiece.

Particularly, according to an embodiment of the present invention, the welding torch is connected via a connecting structure to the nozzle, wherein particularly the welding torch is moveable along the workpiece together with the nozzle (e.g. along the respective weld seam) to generate a further weld seam on top of the previous weld seam, or in order to clean or cool the workpiece.

Furthermore, according to an embodiment of the present invention, the nozzle is connected via a first valve to a first container for storing liquid CO₂.

Furthermore, according to an embodiment of the present invention, the nozzle is connected via a second valve to a second container for storing said cooling gas.

Furthermore, according to an embodiment of the present invention, the cooling gas is one of or comprises one of: CO₂, particularly pure and/or gaseous CO₂; helium; a mixture of nitrogen and hydrogen; a mixture of argon and hydrogen; nitrogen; argon; a mixture comprising helium and argon, wherein this mixture optionally comprises 5 Vol.-% to 10 Vol.-% hydrogen; a mixture comprising helium and nitrogen, wherein this mixture optionally comprises 5 Vol.-% to 10 Vol.-% hydrogen.

Furthermore, according to an embodiment of the present invention, the device comprises a switching unit configured to control the first and the second valve such that when the first valve is open to discharge CO₂ snow via the nozzle, the second valve is closed, and such that when the second valve is open to discharge said cooling gas via the nozzle, the first valve is closed.

Further, according to an embodiment, the nozzle extends along an axis that is tilted with respect to the vertical by an angle that lies in the range from 10° to 80°, particularly in the range from 30° to 60°.

Particularly, according to an embodiment, the nozzle can be tilted in a movement direction (i.e. the welding direction) of the welding torch or it can be tilted in a direction opposite the movement direction of the welding torch.

Preferably, the nozzle is tilted in the direction opposite the movement direction.

Particularly, this helps to achieve that the CO₂ snow or the cooling gas is discharged in a direction that does not point towards a current weld pool so as to avoid disturbance of the weld pool and particularly of a shield gas directed onto the weld pool by the welding torch.

Furthermore, according to an embodiment, the welding torch comprises a shield gas nozzle for discharging a shield gas on the workpiece for shielding the weld pool upon forming a weld seam.

Preferably, in an embodiment, the shield gas nozzle is spaced apart from the cooling and cleaning nozzle by a distance that lies in the range from 10mm to 300mm, particularly in the range from 30mm to 70mm.

According to yet another aspect of the present invention, a method for wire-arc added manufacturing using a device according to the present invention is disclosed, wherein a surface of a weld seam formed on a workpiece is cleaned by discharging CO₂ snow via the nozzle onto the surface of the weld seam, or wherein the weld seam is cooled by discharging a cooling gas via the nozzle onto the surface of the weld seam, and wherein a further weld seam is formed on the cleaned or cooled surface of the weld seam using the weld torch and wire provided by the wire feeder.

Furthermore, according to an embodiment of the present invention, the nozzle is moved along the weld seam upon discharging CO₂ snow or said cooling gas onto the weld seam. Particularly, the welding torch and the nozzle are moved together in a movement direction with the nozzle ahead in the movement direction or with the welding torch ahead of the nozzle in the movement direction.

Further, according to an embodiment of the method, during one of:
- forming a weld seam with the welding torch on top of a previously formed weld seam,
- cleaning a previously formed weld seam by discharging CO₂ snow via the nozzle on the previously formed weld seam,
- cooling a previously formed weld seam by discharging said cooling gas via the nozzle on the previously formed weld seam,
the welding torch and the nozzle are moved together in a movement direction along the previously formed weld seam with the nozzle ahead in the movement direction or with the welding torch ahead of the nozzle in the movement direction.

Furthermore, according to an embodiment of the method, a plurality of weld seams is formed one after the other on top of each other to complete the workpiece using the welding torch.

Particularly, in an embodiment of the method, during welding of a weld seam with the welding torch a region of the workpiece (particularly of a previous weld seam) ahead of or behind a current end of this weld seam (depending on the position of the nozzle with respect to the welding torch, see above) is cleaned by discharging CO₂ snow on said region through the nozzle or cooled by discharging said cooling gas on said region through the nozzle.

Further, according to an embodiment of the method, after forming of each weld seam of said plurality of weld seams, the respective weld seam is cleaned by discharging CO₂ snow through the nozzle on the respective weld seam or cooled by discharging the cooling gas through the nozzle on the respective weld seam.

According to an alternative embodiment of the method, multiple weld seams of said plurality of weld seams are formed on top of one another without discharging CO₂ snow and/or said cooling gas through the nozzle on the respective weld seam before a last weld seam of said multiple weld seams is cleaned by discharging CO₂ snow through the nozzle on the last weld seam or cooled by discharging said cooling gas through the nozzle on the last weld seam. Thereafter, again multiple weld seams can be formed without cleaning or cooling each of these multiple weld seams but the last one.

In other words, only every n-th weld seam (n being an integer number being larger than one) is cleaned by discharging CO₂ snow on the n-th weld seam through the nozzle upon moving the nozzle along the n-th weld seam or cooled by discharging said cooling gas on the n-th weld seam through the nozzle upon moving the nozzle along the n-th weld seam. Particularly n can be in the range from 2 to 10, particularly in the range from 2 to 5. Furthermore, the number n can be increased or lowered during manufacturing of a workpiece

Particularly, the respective cleaning of a weld seam can be performed in a separate cleaning cycle, wherein no welding is performed upon discharging CO₂ snow on a weld seam upon moving the nozzle along this weld seam.

Particularly, the respective cooling of a weld seam can be performed in a separate cooling cycle, wherein no welding is performed upon discharging CO₂ snow on a weld seam upon moving the nozzle along this weld seam.

However, cleaning or cooling can also be performed ahead of the welding torch (or behind the welding torch) through the nozzle upon forming a weld seam using the welding torch and wire feeder (i.e. cleaning or cooling may be performed during welding of a weld seam ahead of the weld seam being formed or on the currently formed weld seam in case the welding torch is moved in the movement direction in front of the nozzle, i.e. the nozzle is behind the welding torch).

Furthermore, according to an embodiment of the method, the cooling gas is one of or comprises one of:
- CO₂, particularly pure CO₂;
- helium;
- a mixture comprising helium and hydrogen
- a mixture comprising nitrogen and hydrogen;
- a mixture comprising argon and hydrogen;
- nitrogen;
- argon;
- a mixture comprising helium and argon, wherein this mixture optionally comprises 5 Vol.-% to 10 Vol.-% hydrogen;
- a mixture comprising helium and nitrogen, wherein this mixture optionally comprises 5 Vol.-% to 10 Vol.-% hydrogen.

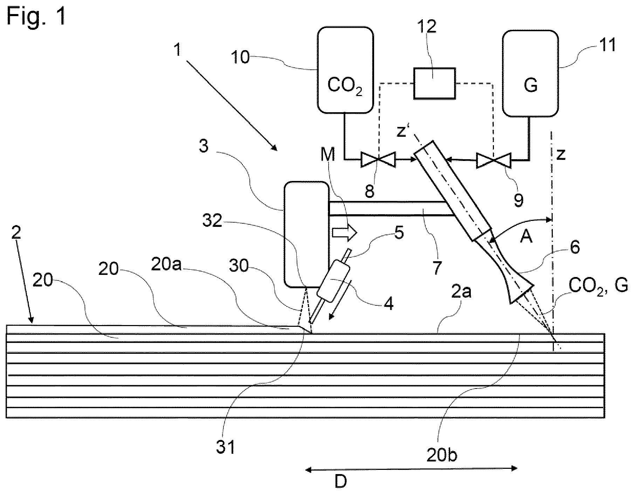

In the following, embodiments, further features, and advantages of the present invention shall be described with reference to the Figure, wherein
- Fig. 1: shows a schematical illustration of an embodiment of a device according to the present invention.

Fig. 1 shows an embodiment of a device 1 according to the present invention that can be used to clean and cool a workpiece 2 upon wire-arc additive manufacturing (WAAM).

According to Fig. 1 the device 1 comprises a welding torch 3 configured to generate an arc 30 for generating a weld pool 31 on a surface 2a of a workpiece 2 to be formed, and a wire feeder 4 that can be connected to the welding torch 3 and that is configured to feed a metallic wire 5 towards the weld pool 31 to generate a weld seam 20 on said surface 2a. Particularly, the wire feeder 4 can also be a part of the welding torch. Such wire feeders 4 are e.g. used in gas metal arc welding (e.g. metal inert gas welding or metal active gas welding).

The welding torch 3 and wire feeder 4 can thus be used to form the workpiece 2 by stacking weld seams 20 on top of one another as shown in Fig. 1.

In order to clean and cool the current surface 2a of the workpiece 2 before laying a further weld seam 20 on top of the current weld seam 20, the device 1 comprises a nozzle 6 that is rigidly connected to the welding torch 3, e.g. through a mechanical connecting structure 7. Thus, the nozzle 6 can be moved in the movement direction M together with the welding torch 3 ahead of the welding torch 3 to clean or cool the current surface 2a of the workpiece 2. However, alternatively, the nozzle 6 can also be arranged behind the welding torch in Fig. 1. Here, the nozzle 6 would follow the welding torch3 in the movement direction M and may clean or cool a portion of a weld seam just formed by the welding torch or formed by the welding torch 3 in a previous cycle.

Particularly, the nozzle 6 extends along an axis z' that is tilted by an angle A with respect to a vertical z that is particularly orthogonal to the surface of the workpiece 2 / top most weld seam 20. In Fig. 1 the nozzle 6 is tilted in a direction that is opposite the movement direction M. Further, the angle A can be in the range from e.g. 0° to 80°, 10° to 80°, or 30° to 60° Further, the nozzle 6 is preferably spaced apart by a distance D from a shield gas nozzle 32 of the welding torch 3 that can e.g. lie in the range from 10mm to 300mm, particularly 30mm to 70mm. The distance D can be variable, e.g. by adjusting the connecting structure 7 accordingly. Particularly, before laying the next weld seam 20, the surface 2a can be cooled by means of discharging CO₂ snow onto the surface 2a in a first run and can thereafter be further cooled down by discharging a cooling gas G onto the surface 2a of the workpiece 2 in a second run. Particularly, the cooling gas G can be one of the mediums stated above.

Thus, according to the present invention, the same nozzle 6 is advantageously used for cleaning and for cooling the respective surface 2a of the current weld seam 20, which reduces complexity of the design of the device 1.

For this, the nozzle 6 is preferably connected via a first valve 8 to a first container 10 for storing liquid CO₂, and via a second valve 9 to a second container 11 for storing said cooling gas G. Particularly, for generating the CO₂ snow, liquid CO₂ is fed into the nozzle 6 and ejected out of the nozzle 6 using e.g. compressed air.

In order to operate the valves 8, 9 in an alternating manner, the device 1 can comprise a switching unit 12 configured to control the first and the second valve 8, 9 such that when the first valve 8 is open to discharge CO₂ snow via the nozzle 6, the second valve 9 is closed, and such that when the second valve 9 is open to discharge said cooling gas G via the nozzle 6, the first valve 8 is closed.

Furthermore, cleaning or cooling of a weld seam does not necessarily have to be performed after forming of each weld seam 20. According to an embodiment, a couple of weld seams 20 can be formed on top of one another before the workpiece 2 (e.g. the top most weld seam 20) is cleaned by moving along this weld seam 20 with the nozzle 6 and ejecting CO₂ snow thereon through the nozzle 6 or cooled by moving along the weld seam 20 with the nozzle 6 and ejecting the cooling gas G thereon through the nozzle 6.

Due to the fact that the nozzle 6 is connected to the welding torch 3 via the connecting structure 7, the nozzle 6 moves ahead in the movement direction M of the welding torch 3 when a weld seam 20 is formed on the workpiece 2 using the welding torch 3 and wire 5 provided by the wire feeder 4 to the weld pool 31. This allows to cleaning a region 20b of the workpiece 2 ahead of an end 20a of the currently formed weld seam 20 with CO₂ snow discharged through the nozzle 6 or to cooling a region 20b of the workpiece 2 ahead of the end 20a of the currently formed weld seam 20 with cooling gas G discharged through the nozzle 6 while forming the weld seam 20 at the same time. As already described above, the nozzle 6 can also behind the welding torch 3 with respect to the movement direction (not shown in Fig. 1). Particularly, for cleaning the workpiece it is preferred to have the nozzle behind the welding torch 3 which may help to remove the hot residues. In case the nozzle 6 is used for cooling, it is preferred to have the nozzle ahead of the welding torch 3 as shown in Fig. 1.

However, cleaning with CO₂ snow and cooling with the cooling gas G through the nozzle 6 can be performed in separate cycles, respectively, wherein no welding of a weld same 20 is conducted in the respective cleaning or cooling cycle.

## Claims

1. A device (1) for wire-arc additive manufacturing, comprising:
- a welding torch (3) configured to generate an arc (30) for generating a weld pool (31) on a surface (2a) of a workpiece (2), and
- a wire feeder (4) configured to feed a wire (5) towards the weld pool (31) to generate a weld seam (20) on said surface (2a),
**characterized in that**
the device (1) comprises a nozzle (6) configured to discharge CO₂ snow onto a surface (2a) of the workpiece (2) for cleaning the surface (2a) before generating a weld seam (20) on said surface (2a), wherein the nozzle (3) is rigidly connected to the welding torch (6).

2. The device according to claim 1, **characterized in that** the welding torch (3) is connected via a mechanical connecting structure (7) to the nozzle such that the welding torch (3) is moveable along the workpiece (2) together with the nozzle (6).

3. The device according to claim 1 or 2, **characterized in that** the nozzle (6) is further configured to discharge a cooling gas (G) onto said workpiece (2) to cool the workpiece (2).

4. The device according to one of the preceding claims, **characterized in that** the nozzle (6) is connected via a first valve (8) to a first container (10) for storing liquid CO₂.

5. The device according to claim 3 or 4, **characterized in that** the nozzle (6) is connected via a second valve (9) to a second container (11) for storing said cooling gas (G).

6. The device according to one of the claims 3 to 5, **characterized in that** the cooling gas (G) is one of or comprises one of:
- CO₂;
- helium;
- a mixture comprising nitrogen and hydrogen;
- a mixture comprising argon and hydrogen;
- nitrogen;
- argon;
- a mixture comprising helium and argon, wherein this mixture optionally comprises 5 Vol.-% to 10 Vol.-% hydrogen;
- a mixture comprising helium and nitrogen, wherein this mixture optionally comprises 5 Vol.-% to 10 Vol.-% hydrogen.

7. The device according to claim 3 and according to claim 4 or 5, **characterized in that** the device (1) comprises a switching unit (12) configured to control the first and the second valve (8, 9) such that when the first valve (8) is open to discharge CO₂ snow via the nozzle (6), the second valve (9) is closed, and such that when the second valve (9) is open to discharge said cooling gas (G) via the nozzle (6), the first valve (8) is closed.

8. The device according to one of the preceding claims, **characterized in that** the nozzle (6) extends along an axis (z') that is tilted with respect to the vertical (z) by an angle (A) that lies in the range from 10° to 80°, particularly in the range from 30° to 60°.

9. The device according to one of the preceding claims, **characterized in that** the welding torch (3) comprises a shield gas nozzle (32) for discharging a shield gas (S).

10. The device according to claim 9, **characterized in that** the shield gas nozzle (32) is spaced apart from the nozzle (6) by a distance (D) that lies in the range from 10mm to 300mm, particularly in the range from 30mm to 70mm.

11. A method for wire-arc added manufacturing using a device (1) according to one of the preceding claims, wherein a surface (2a) of a weld seam (20) formed on a workpiece (2) is cleaned by discharging CO₂ snow via the nozzle (6) onto the surface (2a) of the weld seam (20), or wherein the weld seam (20) is cooled by discharging a cooling gas (G) via the nozzle (6) onto the surface (2a) of the weld seam (20), and wherein a further weld seam (20) is formed on the said surface (2a) of the weld seam (20) using the weld torch (3) and wire (5) fed by the wire feeder (4).

12. The method according to claim 11, **wherein** the nozzle (6) is moved along a weld seam (20) together with the welding torch (3) upon discharging CO₂ snow or said cooling gas (G) onto the weld seam (20).

13. The method according to claim 11 or 12, **wherein** upon one of:
- forming a weld seam (20) with the welding torch (3) on top of a previously formed weld seam (20),
- cleaning a previously formed weld seam (20),
- cooling a previously formed weld seam (20),
the welding torch (3) and the nozzle (6) are moved together in a movement direction (M) along the previously formed weld seam (20) with the nozzle (6) ahead in the movement direction (M) or with the welding torch (3) ahead of the nozzle (6) in the movement direction (M).

14. The method according to one of the claims 11 to 13, **wherein** a plurality of weld seams (20) is formed one after the other on top of each other.

15. The method according to one of the claims 11 to 13, **wherein** upon welding of a weld seam (20) a region (20b) of the workpiece (2) is cleaned by discharging CO₂ snow on said region (20b) or cooled by discharging said cooling gas (G) on said region (20b), wherein said region (20b) is ahead or behind a current end (20a) of this weld seam (20) with respect to the movement direction (M).

16. The method according to claim 14, **wherein** after forming of each weld seam (20) of said plurality of weld seams (20), the respective weld seam (20) is cleaned by discharging CO₂ snow through the nozzle (6) on the weld seam (20) or cooled by discharging the cooling gas (G) through the nozzle (6),
or wherein
multiple weld seams (20) of said plurality of weld seams (20) are formed on top of one another before a last weld seam (20) of said multiple weld seams (20) is cleaned by discharging CO₂ snow through the nozzle (6) on the last weld seam (20) or cooled by discharging said cooling gas (G) through the nozzle (6) on the last weld seam (20).
